# EUROPÄISCHE PATENTSCHRIFT

(11) **EP 1 266 154 B1**
(45) Veröffentlichungstag und Bekanntmachung des Hinweises auf die Patenterteilung: **24.09.2003**
(21) Anmeldenummer: 01923678.5
(22) Anmeldetag: 17.03.2001
(51) Int. Cl.: F16H 57/08

(54) **VERFAHREN ZUM POSITIONSGENAUEN ZUSAMMENBAU EINER PLANETENRAD-EINHEIT**
METHOD FOR ASSEMBLING A PLANETARY GEAR UNIT IN A PRECISE POSITION
PROCEDE PERMETTANT D'ASSEMBLER UNE UNITE A ROUE PLANETAIRE DANS UNE POSITION PRECISE

(30) Priorität: 23.03.2000 DE 10014464
(43) Veröffentlichungstag der Anmeldung: 18.12.2002
(73) Patentinhaber: ZF FRIEDRICHSHAFEN Aktiengesellschaft, 88038 Friedrichshafen (DE)
(72) Erfinder: SKRABS, Alfred, 66271 Sitterswald (DE)
(86) Internationale Anmeldenummer: EP0103075
(87) Internationale Veröffentlichungsnummer: WO01071221

(56) Entgegenhaltungen:
- EP-A- 0 688 976
- CH-A- 415 215
- DE-A- 2 503 518

## Beschreibung

Die Erfindung betrifft ein Verfahren zum positionsgenauen Zusammenbau einer Planetenrad-Einheit, die aus einem Planetenrad, einem Planetenradbolzen mit Zapfen an den Stirnseiten, einem Lager, das zwischen Planetenbolzen und Planetenrad eingesetzt ist, zwei Anlaufscheiben und zwei Führungsscheiben besteht zum Einsatz in einem Planetengetriebe, das ein Sonnenrad und mindestens ein Hohlrad aufweist.

Viele Aufgabenstellungen in der Antriebstechnik, beispielsweise in Kraftfahrzeuggetrieben, verlangen die Realisierung extremer Übersetzungen. Planetengetriebe sind besonders gut geeignet, hohe Übersetzungen mit einer kompakten Bauweise zu vereinen. Als Beispiel dafür sei das sogenannte Wolfrom-Koppelgetriebe genannt, das bei einer hohen Übersetzung sehr hohe Wirkungsgrade aufweist. Als Wolfrom-Getriebe bezeichnet man ein besonders einfaches Koppelgetriebe. Die Antriebswelle ist mit einem Sonnenrad verbunden, das mit einem Planetenräderblock zusammenarbeitet. Das Planetenrad stützt sich an einem innenverzahnten Hohlrad ab, welches mit dem Gehäuse fest verbunden ist, wobei der Steg als Planetenträger leer mitläuft. Die Bewegung wird über den Planetenträger und das Planetenrad, das beispielsweise als Stufenplanet ausgebildet ist, weitergeleitet. Das Planetenrad kämmt seinerseits wieder mit einem zweiten innenverzahnten Hohlrad, das den Abtrieb bildet.

Ein derartiges Planetengetriebe eignet sich für eine kompakte Bauweise, die auf engem Raum hohe Übertragungsdichten ermöglicht.

Insbesondere in der Handhabungstechnik werden zur Leistungsübertragung von hochtourigen Antriebsmotoren hoch untersetzende Getriebe benötigt. Diese Getriebe sollen bei einem Lastrichtungswechsel ein kleines Verdrehspiel aufweisen. Ferner sollen sie sich durch eine drehstarre, leichte und kompakte Bauweise auszeichnen.

Aus der DE A 195 10 499 der Anmelderin ist ein Planetengetriebe bekannt, mit einem angetriebenen Sonnenrad, einem ersten und einem zweiten jeweils innenverzahnten Hohlrad, von denen das erste feststeht und das zweite drehantreibbar gelagert ist und den Abtrieb bildet und mit Planetenrädern, die auf geneigt verlaufenden Achsen in einem Planetenträger in der Weise gelagert sind, dass sie in ständigem Zahneingriff mit dem Sonnenrad und dem Hohlrad stehen. Die Planetenräder sind als Stufenplaneten mit kleinen und grossen Stufenrädern ausgebildet, wobei die Verzahnungen der Stufenräder verschiedene Module aufweisen.

Ein weiteres Planetengetriebe mit einem angetriebenen Sonnenrad und zwei innenverzahnten Hohlrädern ist aus der DE A 43 25 295 der Anmelderin bekannt. Bei diesem Planetengetriebe sind die auf Planetenachsen im Planetenträger gelagerten Achsen unter einem spitzen Winkel relativ zu einer Mittelachse des Planetengetriebes geneigt angeordnet. Der hier leer mitlaufende Planetenträger ist über ein Kugellager auf einer Buchse reibungsarm gelagert, wobei die Buchse zur Einstellung der Axialposition des Planetenträgers an einem Ende über eine Schulter an einem Kugellager anliegt und über einen Sicherungsring an einer Distanzscheibe festgelegt werden kann.

Hierdurch wird ein spielfreies Planetengetriebe geschaffen, bei dem die erzielbare Genauigkeit in der Herstellung, die die Grundlage für eine enge Spieleinstellung bildet, gross ist.

Ein wesentliches Bauteil eines Planetengetriebe ist die eingangs erwähnte Planetenrad-Einheit, die aus einem Planetenrad, einem Planetenbolzen, z. B. mit Zapfen an den beiden Stirnseiten, einem Lager, das zwischen dem Planetenbolzen und dem Planetenrad eingesetzt ist, zwei Anlaufscheiben und zwei Führungsscheiben besteht und die zum Einsatz in dem Planetengetriebe dient. Während der Herstellung müssen positionsgenaue Planetenbohrungen mit Sonderfein-Spindelmaschinen hergestellt werden, wobei die Bohrungen erst durch Vorspindeln und danach durch Fertigspindeln zu bearbeiten sind. Um die Toleranzanforderungen in Bezug auf Achsneigung, Achsschränkung, Durchmessertoleranz und gleichmässigem Sehnenmass zu erfüllen, ist ein sehr hoher Aufwand erforderlich. Dies bedeutet eine hohe Investition für die Sonderfein-Spindelmaschinen, das Bereitstellen teurer Werkzeuge für die Vor- und Fertigspindeln, deren Einsatz eine erhebliche Zeit benötigt, ebenso wie das anschliessend erforderliche Entgraten und der anschliessende Prüfschritt. Um die hohen qualitätssichernden Massnahmen bei der Herstellung insbesondere von Automatgetrieben für Kraftfahrzeuge zu gewährleisten, ist demzufolge ein hoher Fertigungsaufwand erforderlich.

Aufgabe der vorliegenden Erfindung ist es, ein Verfahren zum positionsgenauen Zusammenbau einer eingangs erwähnten Planetenrad-Einheit vorzuschlagen, mit dem die Herstellung in einem einzigen Umformarbeitsgang ausgeführt werden kann.

Ausgehend von einem Verfahren der eingangs näher genannten Art erfolgt die Lösung dieser Aufgabe mit den im Anspruch angegebenen Merkmalen.

Erfindungsgemäss wird also vorgeschlagen, dass der Umformarbeitsgang die folgenden Schritte aufweist:
- die Planetenrad-Einheit wird über das Hohlrad und das Sonnenrad in Mitte-Lagetoleranz eingesetzt, ausgerichtet und in einem Werkzeug eingespannt;
- das Werkzeug, das zwei koaxial zum Planetenbolzen und dessen beiden Stirnseiten gegenüberliegende verschiebbare Stempel sowie zwei die Stempel ringförmig umgebende, unabhängig von den Stempeln verschiebbare Backen mit Ringzacken aufweist, schliesst, bis die Ringzacken an den Führungsscheiben anliegen und diese einklemmen;
- das Werkzeug schliesst weiter, bis die Ringzacken einen konstanten Druck auf die Aussenseiten der beiden Führungsscheiben ausüben und
- die Stempel werden mit einer derartigen Kraft auf die Enden der Planetenbolzen gedrückt, dass diese gestaucht werden und dadurch die zugehörigen Führungsscheiben positionsgenau, formschlüssig und spielfrei mit dem Planetenbolzen verbinden.

Durch diesen in mehreren Schritten ausführbaren Umformarbeitsgang sind keine Feinspindeln zur Herstellung von Planetenbohrungen mehr erforderlich. Die Planetenbohrungen werden hierbei beim Feinstanzen der Führungsscheiben mit einem Spiel (von ca. 0,3 mm) zum Planetenbolzenzapfen mitgestanzt.

Der erfindungsgemäss einfache Umformarbeitsgang führt zu einer erheblichen Kosteneinsparung bei gleichzeitiger Qualitätsverbesserung hinsichtlich Tragbild und Geräuschen. Die Planetenbolzen nehmen einen Teil des Drehmomentes auf, sodass der Planetenträger steifer wird. Je nach Anwendungsfall (d. h. dem erforderlichen Drehmoment) besteht die Möglichkeit, die Planetenstege vollständig entfallen zu lassen, wodurch eine weitere Einsparung von Kosten und Gewicht ermöglicht wird.

Der Abstand im Bereich der Planetenräder wird durch die Schulter des Planetenbolzen exakt eingehalten, wodurch eine Qualitätsverbesserung gegenüber den herkömmlichen Planetenrad-Einheiten erzielt wird; ausserdem müssen die Anlaufscheiben nicht mehr plan geschliffen werden. Entsprechend sind die erforderlichen Investitionen in Maschinen bei Neuprojekten gering.

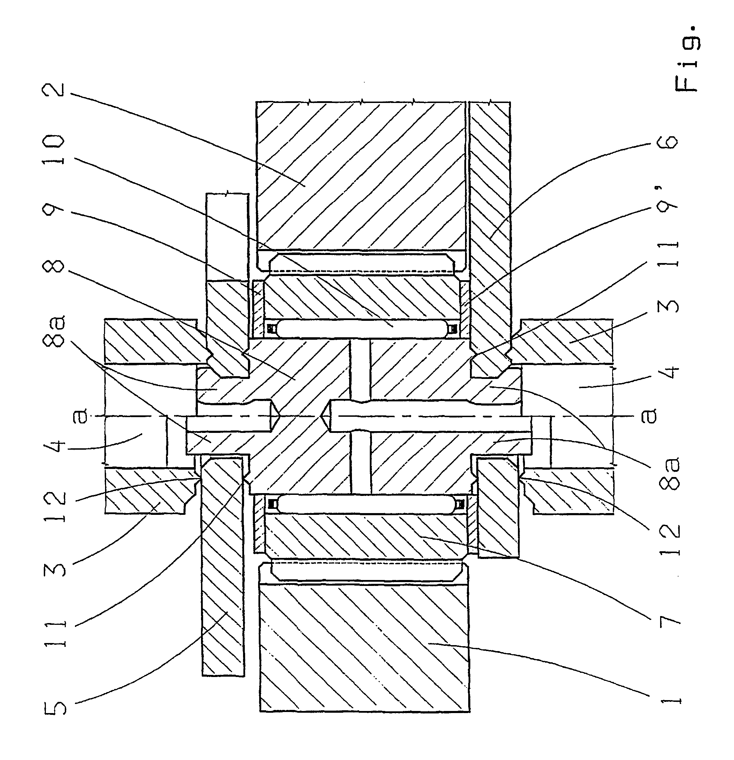

Im folgenden wird die Erfindung anhand der Zeichnung näher erläutert, wobei in der einzigen Figur ein Schnitt durch die Planetenrad-Einheit dargestellt ist während zweier aufeinanderfolgender erfindungsgemässer Schritte.

Wie die Figur erkennen lässt, weist die Planetenrad-Einheit ein Planetenrad 7, einen Planetenbolzen 8 mit Zapfen 8a an seinen beiden Stirnseiten, ein Lager 10, z. B. ein Nadellager, das zwischen dem Planetenbolzen und dem Planetenrad eingesetzt ist, zwei Anlaufscheiben 9 und 9', sowie zwei Führungsscheiben 5 und 6. Mit 1 ist das Hohlrad des zugehörigen Planetengetriebes bezeichnet und mit 2 ein (expandierendes) Sonnenrad.

Der Planetenbolzen 8 bildet auf seinen beiden Stirnseiten zwischen seiner Aussenwand und der Aussenwand der Planetenzapfen 8 Schultern, auf denen jeweils eine Ringzacke 11 ausgebildet ist. Die Ringzacken sind konzentrisch zur Längsachse α-a des Planetenbolzen angeordnet. Mit 10 ist ein herkömmliches Lager, insbesondere ein Nadellager bezeichnet, welches zwischen dem Planetenbolzen 8 und dem Planetenrad 7 eingesetzt ist.

Zur Durchführung des erfindungsgemässen Umformarbeitsganges beim positionsgenauen Zusammenbau der aus Planetenrad, Planetenbolzen, dem Lager und den beiden Anlaufscheiben bestehenden Planetenrad-Einheit ist ein speziell dafür hergestelltes Werkzeug erforderlich, welches auf den den Führungsscheiben 5 und 6 gegenüberliegenden Flächen je eine ringförmige Backe 7 aufweist, wobei in jeder Backe ein unabhängig von dieser verschiebbarer Stempel 4 vorgesehen ist. Die Backen 3, die ebenfalls verschiebbar gelagert sind, weisen an ihren den Führungsscheiben 5, 6 zugewandten Flächen jeweils eine Ringzakke 12 auf, deren Geometrie im wesentlichen gleich derjenigen der Ringzacke 11 auf den Schultern des Planetenbolzens ist.

Das erfindungsgemässe Verfahren zum positionsgenauen Zusammenbau dieser Planetenrad-Einheit besteht nun darin, dass die Planetenrad-Einheit über das Hohlrad 1 und das Sonnenrad 2 in Mitte-Lagetoleranz eingesetzt, ausgerichtet und in dem Werkzeug 3, 4 eingespannt wird; das Werkzeug mit den beiden koaxial zum Planetenbolzen 8 und dessen beiden Stirnseiten gegenüberliegenden verschiebbaren Stempeln 4, sowie den beiden die Stempel 4 ringförmig umgebenden, unabhängig von den Stempeln verschiebbaren Bakken 3 mit den Ringzacken 12, schliesst, bis die Ringzakken 12 an den Führungsscheiben 5, 6 anliegen und diese einklemmen; das Werkzeug 3, 4 schliesst weiter, bis die Ringzacken 12 einen konstanten Druck auf die Aussenseiten der beiden Führungsscheiben 5, 6 ausüben; die Stempel 4 werden mit einer derartigen Kraft auf die Enden der Zapfen des Planetenbolzen gedrückt, das diese gestaucht werden und dadurch die zugehörigen Führungsscheiben positionsgenau, formschlüssig und spielfrei mit dem Planetenbolzen verbinden.

Bei der in der einzigen Figur gezeigten Darstellung ist links von der Längsachse a-a die Situation vor dem Stauchschritt durch die Stempel 4 und rechts von der Linie α-a die Situation nach Durchführung des Stauchschrittes durch die Stempel 4 dargestellt.

Die über das Hohlrad 1 und das expandierende Sonnenrad 2 in Mitte-Lagetoleranz mit O-Spiel ausgerichtete Planetenrad-Einheit wird also durch die ringförmigen Bakken des Werkzeugs gespannt, welches anschliessend weiter schliesst und mit der Ringzacke 12 sowie der auf der Schulter des Planetenbolzens ausgebildeten Ringzacke 11, die ausgerichtete Position in bezug auf die Führungsscheiben 5 und 6 formschlüssig abdeckt. Danach schliesst das Werkzeug weiter, bis ein konstanter Ringzackendruck auf die Anlaufscheiben ausgeübt wird, wonach die Stempel 4 die Zapfen 8a des Planetenbolzens 8 auf ein vorgegebenes Mass anstauchen.

Damit ist die fixierte Position der Planetenradeinheit formschlüssig und spielfrei mit den Führungsscheiben 5 und 6 hergestellt, ohne dass Planetenbohrungen mit Feinspindeln hergestellt werden müssen.

### Bezugszeichen

- 1: Hohlrad
- 2: Sonnenrad
- 3: Backe
- 4: Stempel
- 5: Führungsscheibe
- 6: Führungsscheibe
- 7: Planetenrad
- 8: Planetenbolzen
- 8a: Zapfen
- 9: Anlaufscheibe
- 10: Nadellager
- 11: Ringzacke
- 12: Ringzacke

## Patentansprüche

1. Verfahren zum positionsgenauen Zusammenbau einer Planetenrad-Einheit, die aus einem Planetenrad, einem Planetenbolzen mit Zapfen an den Stirnseiten, einem Lager, das zwischen Plantenbolzen und Planetenrad eingesetzt wird, zwei Anlaufscheiben und zwei Führungsscheiben besteht zum Einsatz in einem Planetengetriebe, das ein Sonnenrad und mindestens ein Hohlrad aufweist, **gekennzeichnet durch** die folgenden Verfahrensschritte:
a) die Planetenrad-Einheit wird über das Hohlrad (1) und das Sonnenrad (2) in Mitte-Lagetoleranz eingesetzt, ausgerichtet und in einem Werkzeug (3, 4) eingespannt;
b) das Werkzeug, das zwei koaxial zum Planetenbolzen (8) und dessen beiden Stirnseiten gegenüberliegende verschiebbare Stempel (4) sowie zwei die Stempel ringförmig umgebende, unabhängig von den Stempeln verschiebbare Backen (3) mit Ringzacken (12) aufweist, schliesst, bis die Ringzacken (12) an den Aussenseiten der Führungsscheiben (5, 6) anliegen und diese einklemmen;
c) das Werkzeug schliesst weiter, bis die Ringzacken (12) einen konstanten Druck auf die Aussenseiten der beiden Anlaufscheiben ausüben; und
d) die Stempel (4) werden mit einer derartigen Kraft auf die Enden der Zapfen (8a) des Planetenbolzens (8) gedrückt, dass diese gestaucht werden und **dadurch** die zugehörigen Führungsscheiben positionsgenau, formschlüssig und spielfrei mit dem Planetenbolzen verbinden.

## Claims

1. The invention relates to a method for position-precise assembly of a planetary-gear unit, which is composed of a planet gear, a planet pinion with studs on the front sides, a bearing inserted between planet pinion and planet gear, two stop disks and two guide pulleys, for use in a planetary transmission provided with a sun gear and at least one ring gear, **characterized by** the following process steps:
a)
Via the ring gear (1) and the sun gear (2), the planetary-gear unit is inserted in central positional tolerance, aligned and clamped in a tool (3,4).
b)
The tool, which features two rams (4) coaxially movable in relation to the planet pinion (8) and facing the pinion's two front sides and also two jaws (3) with serrated rings (12) around the rams and movable independently of the rams, closes until the serrated rings (12) abut on the exterior sides of the guide pulleys (5, 6) and clamp them.
c)
The tool closes further until the serrated rings (12) exert a constant pressure on the exterior sides of the two stop disks.
d)
The rams (4) are pressed against the ends of the studs (8a) of the planet pinion (8) with such a force that they are compressed and as a result position-precise, positive and zero-play connection of the guide pulleys with the planet pinion is established.

## Revendications

1. Procédé pour l'assemblage en position précise d'une unité de pignon satellite qui est composée d'un pignon satellite, d'un axe de satellite portant des tétons à ses faces frontales, d'un palier qui est intercalé entre l'axe de satellite et le pignon satellite, de deux rondelles de portée et deux disques de guidage, unité qui est destinée à être utilisée dans un train épicycloïdal qui comprend une roue planétaire et au moins une couronne à denture intérieure, **caractérisé par** les étapes de procédé suivantes:
a) l'unité de pignon satellite est mise en place, alignée dans une tolérance de position centrale par l'intermédiaire de la couronne à denture intérieure (1) et de la roue planétaire (2) et serrée dans un outil (3, 4) ;
b) l'outil, qui comprend deux poinçons (4) qui peuvent coulisser coaxialement à l'axe de satellite (8) et qui font face aux deux faces frontales de cet axe, ainsi que deux mâchoires (3) pourvues de dents annulaires (12), qui entourent les poinçons en anneau et qui peuvent coulisser indépendamment des poinçons, se ferme jusqu'à ce que les dents annulaires (12) soient appuyées contre les faces extérieures des disques de guidage (5, 6) et serrent ces derniers ;
c) l'outil continue à se fermer jusqu'à ce que les dents annulaires (12) exercent une pression constante sur les faces extérieures des deux rondelles de portée ; et
d) les poinçons (4) sont pressés sur les extrémités des tétons (8a) de l'axe de satellite (8) avec une force telle que ces dernières sont refoulées et que, sous cet effet, les disques de guidage correspondants sont assemblés à l'axe de satellite dans une position précise, par sûreté de forme et sans jeu.
